Europäisches Patentamt

European Patent Office

Office européen des brevets

(19)

(11) Veröffentlichungsnummer: **0 271 638 B1**

(12) **EUROPÄISCHE PATENTSCHRIFT**

(45) Veröffentlichungstag der Patentschrift: **20.03.91**

(51) Int. Cl.⁵: **F01L 1/04**

(21) Anmeldenummer: **87112452.5**

(22) Anmeldetag: **27.08.87**

(54) Gegossene Wellen, insbesondere Nockenwellen.

(30) Priorität: **18.12.86 CH 5043/86**

(43) Veröffentlichungstag der Anmeldung:
**22.06.88 Patentblatt 88/25**

(45) Bekanntmachung des Hinweises auf die
Patenterteilung:
**20.03.91 Patentblatt 91/12**

(84) Benannte Vertragsstaaten:
**AT BE CH DE ES FR GB GR IT LI LU NL SE**

(56) Entgegenhaltungen:
**DE-A- 2 905 706**
**DE-A- 3 330 141**
**DE-A- 3 404 607**
**DE-B- 1 042 998**
**GB-A- 2 153 850**

**PATENT ABSTRACTS OF JAPAN**

**PATENT ABSTRACTS OF JAPAN**

**Patent Abstracts of Japan, Bd. 10, Nr. 385,
24.12.1986, S.91M548**

**Patent Abstracts of Japan, Bd. 10, Nr. 176
(M-491) (2232), 20.06.1986**

(73) Patentinhaber: **VON ROLL AG**

**CH-4563 Gerlafingen(CH)**

(72) Erfinder: **Maier, Konrad**
**Feldstandstrasse 62**
**CH-8590 Romanshorn(CH)**

(74) Vertreter: **EGLI-EUROPEAN PATENT ATTOR-
NEYS**
**Horneggstrasse 4 Postfach 473**
**CH-8034 Zürich(CH)**

EP 0 271 638 B1

## Beschreibung

Gegossene Wellen, insbesondere Nockenwellen

Die Erfindung betrifft eine in einem Stück gegossene Welle gemäß dem Oberbegriff des Anspruch 1 sowie ein Verfahren zu ihrer Herstellung.

Schlanke, gegossene Wellen werden in der Form von Nockenwellen in grossen Stückzahlen für den Bau von Verbrennungsmotoren benötigt. Durch die als Nocken bezeichneten, über der Länge der Welle verteilten Kurvenscheiben werden die Einlass- und Auslass-Ventile direkt oder über Gestänge, z.B. Stossstangen und Kipphebel gesteuert. Die mit der halben Motordrehzahl rotierenden Nockenwellen sind hierbei stark wechselnden Biege- und Torsionsbeanspruchungen ausgesetzt. Das Schwingungsverhalten solcher Nockenwellen ist deshalb von wesentlicher Bedeutung.

Nockenwellen aus Stahl werden insbesondere bei grossen Verbrennungsmotoren verwendet, während für Fahrzeugmotoren gegossene Nockenwellen bevorzugt werden.

Die Erfindung betrifft aus Gusseisen gegossene Nockenwellen, aber auch andere ähnliche, schlanke Wellen. Ihr Vorteil besteht darin, dass sie eine hohe Dämpfungseigenschaft aufweisen und mit verhältnismässig niederem Kostenaufwand hergestellt werden können. Ein weiterer Vorteil der gegossenen Welle besteht darin, dass der zentrale Längskanal, wie er bei vielen Nockenwellen vorgesehen wird, ebenfalls beim Giessen vorgesehen werden kann. Dieser zentrale Längskanal dient dazu, Schmieröl z.B. für die Schmierung der Nocken und der Lagerstellen zuzuführen. Hierzu ist es erforderlich, in der Nockenwelle vom Längskanal abzweigende Querkanäle auzutrinpen, um den Schmierölaustritt an bestimmten, über die Länge der Nockenwelle verteilten Stellen zu ermöglichen.

Es sind Nockenwellen mit Längskanal und Querkanälen bekannt (DE-A-2 905 706, Patent Abstracts of Japan, Band 10, Nr. 385, 24/12/86, S. 91 H 548, DE-A-3 330 141), bei welchen mindestens die Querkanäle als am Gussstück nachträglich angebrachte Bohrlöcher ausgebildet sind. Die Herstellung dieser Querbohrungen erfordert einen zusätzlichen Arbeitsgang, der ausserdem mit hoher Präzision ausgeführt werden muss. Man hat daher versucht, die Querkanäle gleich beim Guss herzustellen und damit das nachträgliche Anbringen von Bohrungen einzusparen. Dabei stellte sich heraus, dass das Giessen von Querkanälen wegen der erforderlichen sehr kleinen Querschnitte derselben - bei zu grossen Querschnitten tritt im Längskanal ein insbesondere bei längeren Wellen nicht mehr tolerierbarer axialer Druckabfall ein - äusserst problematisch ist, da dort das Kernmaterial nicht ohne weiteres standhält.

Aufgabe der Erfindung ist es daher, gattungsgemässe Wellen derart auszubilden, dass sie einschliesslich der Querbohrungen giessbar sind sowie ein besonders günstiges Verfahren zur Herstellung derartiger Wellen anzugeben.

Diese Aufgabe wird durch die Erfindung, wie sie in den Ansprüchen gekennzeichnet ist, gelöst.

Es hat sich nämlich herausgestellt, dass bei erfindungsgemässer Verteilung und Ausbildung der Querkanäle das Kernmaterial der Belastung, der es beim Guss ausgesetzt ist, sicher standhält und damit die Möglichkeit gegeben ist, die Querkanäle gleich beim Guss anzubringen und den Arbeitsgang des Bohrens derselben einzusparen.

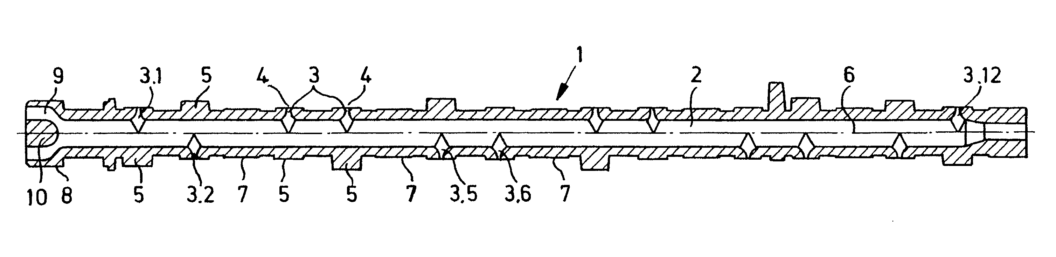

Ein Ausführungsbeispiel der Erfindung ist in der Zeichnung dargestellt und nachfolgend beschrieben. Die Figur zeigt einen Längsschnitt einer gegossenen Nockenwelle mit einem angegossenen Stutzen für die Anordnung eines Bearbeitungszentrums oder eines Gewindes.

In der Figur ist eine gegossene Nockenwelle 1 im Schnitt dargestellt. Aus dieser ist ersichtlich, dass die Nockenwelle 1 mit einem zentralen Längskanal 2 und mit vom Längskanal 2 abzweigenden Querkanälen 3 abgegossen wird. Die Querkanäle 3 sind zur genaueren Bezeichnung von links nach rechts mit 3.1, 3.2 ... 3.12 bezeichnet. Bei der Nockenwelle 1 nach der Figur sind die Querkanäle 3 so angeordnet, dass ihre Mündungen 4 an die Oberfläche der Nocken 5 münden. Bei der vorliegenden Ausführung der Nockenwelle 1 liegen die Querkanäle 3 in einer gemeinsamen, die Längsachse 6 des Längskanals 2 schneidenden Diagonalebene. Dadurch wird die Herstellung der Giessform vereinfacht. Grundsätzlich wäre es jedoch auch möglich, die Querkanäle 3 in verschiedene Diagonalebenen zu legen. Dies würde allerdings einen grösseren Aufwand für die benötigten Formwerkzeuge bedingen. Dieser kann jedoch in bestimmten Anwendungsfällen berechtigt sein. Der Längskanal 2 und die Querkanäle 3 dienen der Schmierung der Nockenwelle, insbesondere der Lagerstellen und der die Nocken 5 bildenden Kurvenscheiben. Wesentlich ist jedoch, dass der Längskanal 2 einen wesentlich grösseren Querschnitt aufweist als die Summe aller Mündungsquerschnitte der Querkanäle 3, damit ein entsprechender Druck im Längskanal 2 über die ganze Länge der Nockenwelle aufrecht erhalten werden kann. Der Mündungsquerschnitt eines einzigen Querkanals 3 ist somit um ein Vielfaches kleiner als der Querschnitt des Längskanals 2; der Querschnitt des Längskanals 2 kann z.B. das Doppelte der Summe aller Mündungsquerschnitte der Querkanäle 3 aufwei-

2

sen.

In der Figur liegen alle Querkanäle 3, d.h. die Querkanäle 3.1 ... 3.12, auf den Nocken 5 - es handelt sich bei der in der Figur dargestellten Nockenwelle um eine solche für einen 6-Zylinder-Reihenmotor mit je einem Nocken für ein Einlass- und ein Auslassventil - und dienen der Verbesserung der Schmierung an den Berührungsflächen zwischen einem Ventilschaft- bzw. einer Gestängefläche und der Nockenfläche. Jedoch ist es auch möglich, Querkanäle 3 in den Lagerpartien 7 oder zwischen den Nocken 5 und den Lagerpartien 7 anzuordnen. In jedem Fall ist es aber möglich, die Querkanäle 3 mit dem Abgiessen der Nockenwelle 1 zusammen mit dem Längskanal 2 zu giessen.

Aus der Figur ist noch ersichtlich, dass die Querkanäle 3 ovale Form haben, wobei sich die Längere Achse in Umfangsrichtung erstreckt. Dadurch werden scharfe Ecken mit den bekannten Kerbwirkungen vermieden und zudem können dadurch die Kernpartien am Uebergang zum Kern des Längskanals verstärkt werden, wodurch sie der beim Guß auftretenden Belasting sicher standhalten.

Bei der Herstellung der Nockenwelle 1 wird zuerst ein Rohling gegossen der an dem einen Ende einen Anguss auf weist, der zu einem Stutzen 8 als Verlängerung der Nockenwelle bearbeitet wird. Dieser Stutzen weist zwei gegenüberliegende flache Kanäle 9 auf, welche einen mit dem Längskanal 2 fluchtenden Materialzapfen 10 teilweise umfassen. Der Materialzapfen 10 ermöglicht die Anordnung eines Bearbeitungszentrums, wodurch die Bearbeitung der Nockenwelle 1 auf die Enddimensionen erleichtert wird. Es kann aber auch im Sutzen 8 ein Gewinde, z.B. ein Innengewinde im Zapfen 10 zur Befestigung eines Antriebsrades, vorgesehen werden. Der Rohling kann z.B. im Schalenhartguss sowohl mit lamellaren als auch mit sphärolithischem Graphit abgegossen werden.

Wird zur Gewichtsverminderung in der Nockenwelle 1 ein Längskanal 2 mit einem noch grösseren Querschnitt vorgesehen, hat die Legierung der besonderen Bedingung zu genügen, dass beim Abgiessen ein perlitisch-sorbitisches Grundgefüge mit einer genauen sphärolitischen Ausbildung erhalten wird. Es ist hierbei folgende Legierung einzuhalten (in Gewichtsprozent)

| Kohlenstoff: | 2,8 – 3,4% |
|---|---|
| Silizium: | 2,0 – 2,8% |
| Mangan: | 0,15 max. |
| Zinn: | 0,1 – 0,5% |
| Phosphor: | max. 0,06% |
| Magnesium: | 0,035 – 0,060% |
| Rest: | Eisen |

Der Siliziumgehalt wird durch eine Impfmenge von mindestens 0.4% erreicht.

Damit werden folgende mechanische Eigenschaften erreicht:

Zugfestigkeit $R_m$ = 800 . 1000 N/mm$^2$

Brinellhärte HB30 = 250 - 320 HB

Bruchdehnung A5 = 2 - 3%

Mit dieser Legierung erhält man ein ferritfreies Grundgefüge. Dies wird erreicht durch die Zugabe von mindestens 0,1% Zinn. Ausserdem erreicht man mit dem Legieren von Zinn einen gleichmässigen, engmaschigen Perlit-Sorbit.

Damit im Grundgefüge kein Primärgraphit vorhanden ist, der beim Umschmelzen vergast und Blasen erzeugt, wird der C-Gehalt reduziert und der Sättigungsgrad unter 1 eingestellt.

Die Graphitgrösse soll sehr fein ausgebildet sein (6 - 8 nach Norm ...), was durch Zuführung des grössten Anteils an Silizium über die Impfung erreicht wird.

Die beschriebene Legierung ermöglicht die Anwendung der Induktiv- oder Laser-Härtung oder auch des WIG-Umschmelzverfahrens. Zur weiteren Gewichtsverminderung der Nockenwelle 1 können im Längskanal 2 Ausbuchtungen entsprechend der Aussenkontur der Welle, z.B. im Bereich der Nocken 5, vorgesehen werden. Auch ist es möglich, die Nockenwelle 1 nicht nur einseitig, sondern auch an beiden Enden einen Stutzen 8 zur Anbringung eines Bearbeitungszentrums oder eines Gewindes vorzusehen.

**Ansprüche**

3

1. In einem Stück gegossene, insbesondere schlanke Welle mit eingegossenem zentralem Längskanal (2) und von demselben abzweigenden` düsenartig ausgebildeten Querkanälen (3) , **dadurch gekennzeichnet, dass** die Querkanäle (3) ebenfalls eingegossen sind und ihre Mündungen (4) sowohl über den Umfang als auch über die Länge der Welle mit Abstand zueinander verteilt sind und ovale Form haben, wobei sich jeweils die grössere Achse in Umfangsrichtung erstreckt.

2. Welle nach Anspruch 1, **dadurch gekennzeichnet, dass** der Querschnitt jeder der Mündungen (4) der Querkanäle (3) gegenüber dem Querschnitt des Längskanals (2) um ein Vielfaches kleiner ist.

3. Welle nach Anspruch 2, **dadurch gekennzeichnet, dass** der Querschnitt des Längskanals (2) grösser ist als die Summe der Querschnitte der Mündungen (4).

4. Welle nach einem der Ansprüche 1 bis 3, **dadurch gekennzeichnet, dass** die Querkanäle (3) in einer die Längsachse (6) der Welle enthaltenden Längsebene angeordnet sind.

5. Welle nach einem der Ansprüche 1 bis 4, **dadurch gekennzeichnet, dass** bei der als Nockenwelle ausgebildeten Welle die Mündungen (4) der Querkanäle (3) in den Umfangsflächen der Nocken (5) liegen.

6. Welle nach einem der Ansprüche 1 bis 5, **dadurch gekennzeichnet, dass** sie aus einer Legierung mit

| | |
|---|---|
| Kohlenstoff: | 2,8 − 3,4% |
| Silizium: | 2,0 − 2,8% |
| Mangan: | max. 0,15% |
| Zinn: | 0,1 − 0,5% |
| Phosphor: | max. 0,06% |
| Magnesium: | 0,035 − 0,06% |
| Rest Eisen | |

besteht.

7. Verfahren zur Herstellung einer Welle nach Anspruch 1, wobei die Welle in einem Stück mit eingegossenem zentralem Längskanal (2) gegossen wird, **dadurch gekennzeichnet, dass** vom Längskanal (2) abzweigende, düsenartig ausgebildete Querkanäle (3) ebenfalls eingegossen sind und ihre Mündungen (4) sowohl über den Umfang als auch über die Länge der Welle mit Abstand zueinander verteilt sind und ovale Form haben, wobei sich jeweils die grössere Achse in Umfangsrichtung erstreckt und dass als Zwischenprodukt ein Rohling (1) hergestellt wird, an dessen einer Stirnseite ein den Längskanal (2) mindestens teilweise abdeckender Stutzen (8) mit einem zentrischen Zapfen (10) für die Anordnung eines Bearbeitungszentrums oder eines Gewindes angegossen wird.

## Claims

1. One piece cast particularly slender, shaft with a cast in central longitudinal channel (2) and nozzle-like constructed transverse channels (3) branching off from the same, characterized in that the transverse channels (3) are likewise cast in and their mouths (4) are distributed relative to one another at a distance both around the periphery and also over the length of the shaft and have an oval shape, wherein the larger axis in each case extends in the peripheral direction.

2. Shaft according to Claim 1, characterized in that the cross-section of each of the mouths (4) in the transverse channels (3) compared to the cross-section of the longitudinal channel (2) is smaller by a multiple.

EP 0 271 638 B1

3. Shaft according to Claim 2, characterised in that the cross-section of the longitudinal channel (2) is larger than the sum of the cross-sections of the mouths (4).

4. Shaft according to one of Claims 1 to 3, characterized in that the transverse channels (3) are arranged in a longitudinal plane containing the longitudinal axis (6) of the shaft.

5. Shaft according to one of Claims 1 to 4, characterized in that, in the case of a shaft constructed as a camshaft, the mouths (4) of the transverse channels (3) lie on the peripheral surfaces of the cams (5).

6. Shaft according to one of Claims 1 to 5, characterised in that it consists of an alloy with

| | |
|---|---|
| Carbon: | 2.8 - 3.4% |
| Silicon: | 2.0 - 2.8% |
| Manganese: | max. 0.15% |
| Tin: | 0.1 - 0.5% |
| Phosphorus: | max. 0.06% |
| Magnesium: | 0.035 - 0.06% |
| Remainder iron. | |

7. Process for the manufacture of a shaft according to Claim 1, wherein the shaft is cast in one piece with a cast in central longitudinal channel (2) characterised in that transverse channels branching off from the longitudinal channel (2) and constructed as nozzles (3) are likewise cast in and their mouths (4) are distributed relative to one another both over the periphery and also over the length of the shaft and have an oval shape, wherein in each case the larger axis extends in the peripheral direction and that, as intermediate product, a casting (1) is manufactured on the one end face of which there is cast a post (8) at least partly covering the longitudinal channel (2) and with a central pin (10) for the arrangement of a working centre or a thread.

## Revendications

1. Arbre coulé d'une seule pièce, en particulier arbre mince à canal longitudinal central (2) coulé à l'intérieur et canaux transversaux (3), en forme de buses, partant du canal central, caractérisé en ce que les canaux transversaux (3) sont également coulés à l'intérieur et en ce que leurs embouchures (4) sont réparties espacées les unes des autres sur le pourtour ainsi que sur la longueur de l'arbre et ont une forme ovale, le plus grand axe s'étendant dans chaque cas dans la direction périphérique.

2. Arbre selon la revendication 1, caractérisé en ce que la section transversale de chacune des embouchures (4) des canaux transversaux (3) est plusieurs fois inférieure à la section transversale du canal longitudinal (2).

3. Arbre selon la revendication 2, caractérisé en ce que la section transversale du canal longitudinal (2) est supérieure à la somme des sections transversales des embouchures (4).

4. Arbre selon l'une des revendications 1 à 3, caractérisé en ce que les canaux transversaux (3) sont disposés dans un plan longitudinal contenant l'axe longitudinal (6) de l'arbre.

5. Arbre selon l'une des revendications 1 à 4, caractérisé en ce que dans l'arbre configuré en arbre à cames, les embouchures (4) des canaux transversaux (3) se situent dans les surfaces périphériques des cames (5).

6. Arbre selon l'une des revendications 1 à 5, caractérisé en ce qu'il est réalisé dans un alliage contenant :

5

| Carbone | 2,8-3,4 % |
| Silicium | 2,0-2,8 % |
| Manganèse | max 0,15 % |
| Etain | 0,1-0,5 % |
| Phosphore | max 0,06 % |
| Magnésium | 0,035-0,060 % |
| Reste Fer | |

7. Procédé de fabrication d'un arbre selon la revendication 1, dans lequel l'arbre est coulé d'une seule pièce avec canal longitudinal central (2) coulé à l'intérieur, caractérisé en ce que des canaux transversaux (3), en forme de buses, partant du canal longitudinal (2) sont également coulés à l'intérieur et en ce que leurs embouchures (4) sont réparties espacées les unes des autres, sur le pourtour ainsi que sur la longueur de l'arbre et ont une forme ovale, le plus grand axe s'étendant dans chaque cas, dans la direction périphérique et en ce qu'on fabrique comme produit intermédiaire, une ébauche (1) sur une face frontale de laquelle est coulée d'une seule pièce une tubulure (8) recouvrant au moins partiellement le canal longitudinal (2), avec un tenon (10) central pour la mise en place d'un centre d'usinage ou d'un taraudage.